# FASCICULE DE BREVET EUROPEEN

(11) **EP 3 010 133 B1**
(45) Date de publication et mention de la délivrance du brevet: **15.04.2020**
(21) Numéro de dépôt: 15182375.4
(22) Date de dépôt: 25.08.2015
(51) Int. Cl.: H02M 7/162, H02M 1/08

(54) **CIRCUIT DE REDRESSEMENT CONTRÔLÉ**
ANORDNUNG ZUR KONTROLLIERTEN GLEICHRICHTUNG
CONTROLLED RECTIFIER CIRCUIT

(30) Priorité: 17.10.2014 FR 1459993
(43) Date de publication de la demande: 20.04.2016
(73) Titulaire: STMicroelectronics (Tours) SAS, 37100 Tours (FR)
(72) Inventeur: GONTHIER, Laurent, Zhongshan District Taipeh City 10462 (TW)
(74) Mandataire: Cabinet Beaumont

(56) Documents cités:
- FR-A1- 2 742 013
- FR-A1- 2 746 981
- FR-A1- 2 816 127
- FR-A5- 2 038 643

## Description

### Domaine

La présente description concerne de façon générale les circuits électroniques et, plus particulièrement, la réalisation d'un pont redresseur à base de diodes et de thyristors.

### Exposé de l'art antérieur

On connaît de nombreuses solutions de ponts redresseurs commandables, basés sur l'utilisation de thyristors.

Par exemple, le document US 6 493 245 décrit un pont redresseur dont deux thyristors à gâchette de cathode sont prévus dans la partie haute du pont, c'est-à-dire avec les cathodes connectées au potentiel positif de la tension redressée.

Le document FR 2 742 013 décrit un procédé et dispositif de limitation d'appel de courant d'un condensateur associé à un redresseur.

Le document FR 2 038 643 décrit un alternateur à caractéristique intensité-vitesse étagée.

Le document FR 2 746 981 décrit un dispositif de commande d'un pont mixte au zéro de tension.

### Résumé

Un mode de réalisation vise à pallier tout ou partie des inconvénients des ponts redresseurs à thyristors usuels.

Un autre mode de réalisation vise plus particulièrement à proposer un pont redresseur commandable dont la commande est simplifiée.

Un autre mode de réalisation vise à proposer un pont redresseur commandable directement par un microcontrôleur.

Ainsi, un mode de réalisation prévoit un circuit de redressement comportant :
entre une première borne d'application d'une tension alternative et une première borne de fourniture d'une tension redressée, une première diode ;
entre une deuxième borne d'application de la tension alternative et une deuxième borne de fourniture de la tension redressée, un premier thyristor à gâchette d'anode, l'anode du premier thyristor étant connectée à la deuxième borne de fourniture de la tension redressée ; et
au moins un étage de commande du thyristor ou d'un des thyristors, incluant :
   une diode reliant la gâchette du thyristor à la deuxième borne de fourniture de la tension redressée ; et
   un élément capacitif en série avec un élément résistif reliant la gâchette du thyristor à un circuit de génération d'impulsions de commande.

Selon un mode de réalisation, le circuit comporte en outre, entre la deuxième borne d'application de la tension alternative et la première borne de fourniture de la tension redressée, une deuxième diode.

Selon un mode de réalisation, le circuit comporte en outre, entre la première borne d'application de la tension alternative et la deuxième borne de fourniture de la tension redressée, un deuxième thyristor à gâchette d'anode, l'anode du deuxième thyristor étant connectée à la deuxième borne de fourniture de la tension redressée.

Selon un mode de réalisation, le circuit comporte en outre, entre la cathode du premier thyristor et chaque borne d'application de la tension alternative, une diode.

Selon un mode de réalisation, chaque thyristor est associé à un étage de commande.

Selon un mode de réalisation, le circuit de commande génère des trains d'impulsions à une fréquence de l'ordre de 10 à 100 fois supérieure à la fréquence de la tension alternative.

Selon un mode de réalisation, le circuit de commande est alimenté par une tension fournie par un circuit d'alimentation connecté à la première borne de fourniture de la tension redressée, un condensateur reliant le circuit d'alimentation à la deuxième borne de fourniture de la tension redressée.

Selon un mode de réalisation, un interrupteur commandé par le circuit de commande est intercalé entre la deuxième borne de fourniture de la tension redressée et un noeud d'interconnexion de l'anode du thyristor ou des anodes des thyristors, de la cathode de la diode de l'étage de commande ou des cathodes des diodes des étages de commande, d'une borne de référence du circuit de commande et du condensateur.

Selon un mode de réalisation, le circuit comporte en outre un élément capacitif entre les deux bornes de fourniture de la tension redressée.

Selon un mode de réalisation, un interrupteur commandé par le circuit de commande est intercalé entre la deuxième borne de fourniture de la tension redressée et un noeud d'interconnexion de deux condensateurs constituant ledit élément capacitif, une diode reliant ledit noeud à une borne d'alimentation du circuit de commande.

Selon un mode de réalisation, au moins une diode en série avec un élément résistif relie la deuxième borne de fourniture de la tension redressée à une des bornes d'application de la tension alternative.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma électrique d'un exemple de pont redresseur à thyristors usuel ;
la figure 2 est un schéma électrique d'un mode de réalisation d'un pont redresseur à thyristors ;
la figure 3 est un schéma électrique d'une variante de réalisation d'un pont redresseur commandable ; et
la figure 4 est un schéma électrique d'un autre mode de réalisation d'un pont redresseur à thyristors.

### Description détaillée

De mêmes éléments ont été désignés par de mêmes références aux différentes figures. Par souci de clarté, seuls les éléments utiles à la compréhension des modes de réalisation décrits ont été représentés et seront détaillés. En particulier, l'utilisation faite de la tension redressée n'a pas été détaillée, les modes de réalisation décrits étant compatibles avec les applications usuelles d'une telle tension redressée. De plus, les circuits de génération de signaux de commande à partir d'un microcontrôleur n'ont pas non plus été détaillés, les modes de réalisation décrits étant là encore compatibles avec les circuits usuels de génération de signaux de commande.

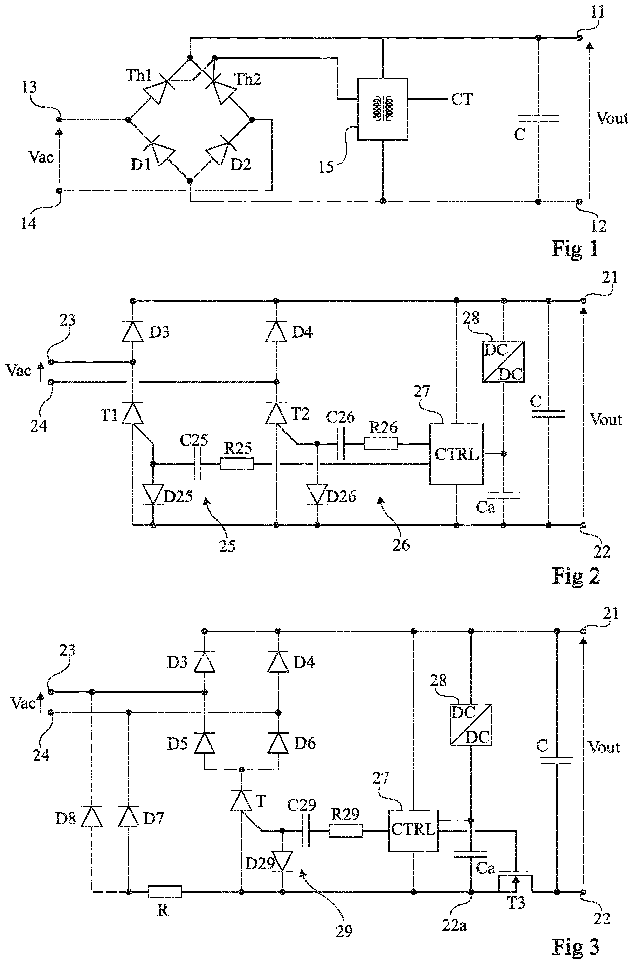

La figure 1 est un schéma électrique d'un exemple de pont redresseur commandable à thyristors du type décrit dans le document US 6 493 245 susmentionné. Ce pont est un pont double alternance et comporte deux branches parallèles entre deux bornes 11 et 12 de fourniture d'une tension redressée Vout. Chaque branche comporte un thyristor Th1, respectivement Th2, relié à une diode D1, respectivement D2, les anodes des diodes étant côté borne 12 qui définit le potentiel le plus négatif (généralement la masse ou potentiel de référence) de la tension redressée Vout. Les points milieux respectifs entre les thyristors et des diodes définissent deux bornes 13 et 14 d'application d'une tension alternative Vac à redresser. Un élément capacitif C est généralement connecté entre les bornes 11 et 12 pour lisser la tension redressée. Le cas échéant, un élément inductif (non représenté) peut être intercalé en entrée du pont (par exemple, entre la borne 13 et le point milieu entre le thyristor Th1 et la diode D1). Un tel élément sert notamment au filtrage du courant prélevé en entrée du pont. Un élément inductif peut aussi être placé en sortie, entre par exemple la borne 11 et le point commun des deux anodes des thyristors Th1 et Th2. Cet élément inductif peut être placé en amont ou en aval du condensateur C. Ce type d'élément peut être utilisé par exemple dans un circuit d'alimentation à découpage utilisé pour corriger le facteur de puissance du courant prélevé sur le réseau.

Les thyristors Th1 et Th2 sont des thyristors à gâchette de cathode destinés à être commandés à partir d'un signal CT.

Dans un tel pont redresseur commandable, on ne peut pas appliquer une tension de commande provenant directement d'un microcontrôleur ni, plus généralement, une tension directement référencée au potentiel de référence 12, en raison de la référence des cathodes des thyristors Th1 et Th2 qui se situe côté potentiel le plus positif (borne 11) de la tension redressée. Cela impose d'utiliser un élément de conversion 15 de type transformateur à isolement galvanique ou opto-coupleur pour convertir la référence du signal de commande.

Une telle réalisation accroît les coûts de production d'un pont redresseur commandable.

La figure 2 est un schéma électrique d'un mode de réalisation d'un circuit de redressement commandable. Ce circuit comporte un pont redresseur ayant deux branches parallèles entre deux bornes 21 et 22 de fourniture d'une tension redressée Vout. Chaque branche comporte une diode D3, respectivement D4, connectée à un thyristor T1, respectivement T2, entre les bornes 21 et 22, les anodes des thyristors étant connectées à la borne 22 et les cathodes des diodes étant connectées à la borne 21. Les points milieu respectifs des deux branches définissent des bornes 23 et 24 d'application d'une tension alternative Vac à redresser, la borne 23 étant reliée à l'anode de la diode D3 et à la cathode du thyristor T1, la borne 24 étant reliée à l'anode de la diode D4 et à la cathode du thyristor T2. Un élément capacitif C de filtrage relie de préférence les bornes 21 et 22.

Les thyristors T1 et T2 sont des thyristors à gâchette d'anode. Les gâchettes respectives des thyristors T1 et T2 reçoivent des signaux de commande d'un circuit 27 de type circuit numérique de commande ou microcontrôleur (CTRL), par l'intermédiaire d'étages 25 et 26. Chaque étage est constitué d'une diode D25, respectivement D26, reliant la gâchette du thyristor T1, respectivement T2, à la borne 22, l'anode de la diode D25 ou D26 étant côté gâchette du thyristor T1 ou T2, et d'une association en série d'un élément capacitif C25, respectivement C26, et d'un élément résistif R25, respectivement R26, reliant les gâchettes respectives des thyristors T1 et T2 au circuit 27.

Le circuit de commande 27 est, par exemple, un microcontrôleur ou un circuit intégré alimenté à partir d'une basse tension (par exemple d'une valeur comprise entre 3,3 volts à 12 volts) générée par un circuit d'alimentation 28 (DC/DC) à partir de la tension Vout. Un élément capacitif Ca est connecté entre le circuit 28 et la borne 22. Ce circuit de type régulateur de tension fournit une tension d'alimentation adaptée au circuit 27. Le microcontrôleur peut, d'autre part, recevoir des informations d'autres circuits non représentés.

Une différence par rapport au circuit de la figure 1 est qu'il n'est plus nécessaire d'avoir recours à un élément de conversion du type opto-coupleur ou transformateur d'isolement galvanique pour appliquer les signaux de commande aux thyristors. Cela simplifie considérablement la réalisation d'un pont redresseur commandable et réduit son coût.

Le fonctionnement du pont est le suivant. Le thyristor T2 est rendu passant pendant les alternances positives de la tension d'entrée et le thyristor T1 est rendu passant pendant les alternances négatives.

Pour que du courant circule dans un des thyristors T1 et T2, il faut que son potentiel d'anode soit supérieur à son potentiel de cathode et qu'il soit activé en tirant un courant sur sa gâchette. Pour simplifier, on négligera dans les explications qui suivent les chutes de tension en direct dans les diodes et les thyristors.

Selon un mode de réalisation, pour rendre l'un des thyristors passant, le circuit 27 génère un train d'impulsions à une fréquence supérieure à la fréquence de la tension Vac (par exemple, environ 10 à 100 fois supérieure).

Lors d'une alternance positive, à chaque impulsion (positive) générée par le circuit 27, un courant circule dans la résistance R26, dans la capacité C26 et dans la diode D26, ce qui provoque la charge de la capacité C26. Lorsque le signal de sortie du circuit 27 est abaissé à un niveau bas (en général, le niveau de la borne de référence 22), un courant inverse circule par la décharge de la capacité C26 à travers la résistance R26, le circuit 27 (en pratique le transistor bas de son étage de sortie non représenté), et la gâchette du thyristor T2. Dès que le potentiel de cathode du thyristor T2 devient inférieur à son potentiel d'anode, c'est-à-dire que l'amplitude redressée de la tension Vac devient supérieure à la tension aux bornes de la capacité C, le thyristor T2 s'amorce sur le front descendant de la prochaine impulsion de commande générée par le circuit 27. Cela revient à tirer un courant dans cette gâchette et amorce le transistor T2 qui reste passant jusqu'à ce que son courant s'annule.

On note que, plus la fréquence des impulsions générées par le circuit 27 est élevée, plus le délai entre l'instant où la tension anode-cathode du thyristor T2 devient positive et l'amorçage du thyristor T2 est court.

Un fonctionnement similaire se produit lors des alternances négatives avec le thyristor T1 et l'étage 25.

Selon une variante de réalisation qui requiert que le circuit 27 surveille les niveaux de tension respectifs Vac et Vout, une seule impulsion de commande est générée par alternance de la tension Vac lorsque les autres conditions de conduction sont réunies.

Lors du démarrage du circuit, c'est-à-dire lorsque le condensateur C est initialement déchargé, le circuit 27 n'est pas alimenté s'il n'est pas connecté à une autre source d'énergie.

Pour permettre le démarrage, on peut alors prévoir un élément inductif entre l'une des bornes 23 et 24 et l'entrée du pont à laquelle cette borne est connectée. L'effet de cette inductance est de ralentir la croissance du courant prélevé aux bornes 23 et 24 lorsque les thyristors T1 et T2 sont amorcés alors que le condensateur C n'est pas ou est très faiblement chargé.

Selon une variante qui sera exposée ci-dessous en relation avec la figure 3, une charge initiale (au démarrage) du condensateur 27 est assurée par une ou plusieurs diodes supplémentaires ainsi qu'un élément résistif, entre l'une des bornes 23 et 24 et la borne 22 du pont.

La figure 3 représente le schéma électrique de variantes de réalisation.

Par rapport à la réalisation de la figure 2, un seul thyristor à gâchette d'anode T est utilisé. La cathode de ce thyristor est reliée à des anodes respectives de diodes D5 et D6, respectivement connectées dans les même bras de pont que les diodes D3 et D4, les points milieu entre les diodes D3 et D5, respectivement D4 et D6, étant reliés aux bornes 23 et 24. Une telle réalisation ajoute une chute de tension dans le pont redresseur mais permet de n'utiliser qu'un seul thyristor à gâchette d'anode pour commander les deux alternances. L'étage de commande 29 du thyristor T est constitué d'une diode D29, d'un condensateur C29 et d'une résistance R29 à la manière des étages 25 et 26 de la figure 2.

La figure 3 illustre une autre variante visant à permettre une charge initiale du condensateur C. Pour cela, une diode D7 relie l'une des bornes d'entrée (par exemple la borne 24) à la masse 22 par l'intermédiaire d'une résistance R. Le cas échéant, une autre diode D8 relie l'autre borne d'entrée (par exemple 23) à la résistance R pour démarrer en double alternance. L'effet de cette résistance (qui en général présente un coefficient de variation avec sa température) est de permettre la charge du condensateur C à la mise sous tension, alors que le circuit 27 n'est pas encore alimenté et ne peut donc pas commander les thyristors T1 et T2 qui sont donc à l'état bloqué (empêchant autrement toute charge de C). Une telle variante permet d'alimenter le circuit 27 en évitant un élément inductif en entrée du pont. Cette variante est combinable avec le mode de réalisation de la figure 2.

Selon une autre variante représentée en figure 3, on intercale un interrupteur T3 (par exemple, un transistor MOS) entre la borne 22 et un noeud, noté 22a, représentant la connexion commune de l'anode du thyristor T, de la cathode de la diode D29, de la borne de référence du circuit 27 et du condensateur Ca. L'interrupteur T3 est commandé par le circuit 27 et est ouvert au démarrage. Il permet que le courant de charge, alimentant le circuit 28 à travers la résistance R, ne charge pas le condensateur C, mais uniquement le condensateur Ca, lorsque le pont redresseur contrôlé (constitué des éléments D3, D4, D5, D6 et T, ou des éléments D3, D4, T1 et T2) est désactivé. Ce mode de réalisation permet de réduire les pertes consommées en mode veille par le circuit complet et les circuits connectés entre les bornes 21 et 22. Dans ce mode de réalisation, un élément inductif peut être utile afin de charger progressivement le condensateur C au démarrage lorsque l'interrupteur T3 est rendu conducteur, en amorçant les thyristors T1 et T2 en fin d'alternance de la tension secteur (tension Vac) et en augmentant progressivement la durée de conduction des thyristors T1 et T2 jusqu'à une charge complète du condensateur C à une valeur proche de la valeur crête de la tension alternative. Cette variante est, là encore, combinable avec le mode de réalisation de la figure 2.

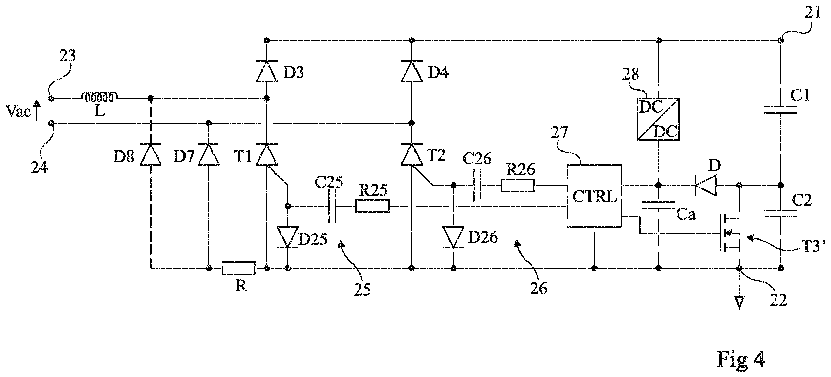

La figure 4 représente encore un autre mode de réalisation selon lequel, par rapport au mode de réalisation de la figure 2, l'élément capacitif C est constitué de deux condensateurs C1 et C2 dont le point milieu est relié, par une diode D (anode de la diode connectée au point milieu entre les condensateurs C1 et C2), à la borne d'alimentation du circuit 27, c'est-à-dire à l'électrode positive du condensateur Ca. Un interrupteur T3' relie l'anode de la diode D à la borne 22. Le mode de réalisation de la figure 4 illustre également la présence des diodes D7 et D8 et de la résistance R, ainsi que d'une inductance L entre la borne 23 et l'anode de la diode D3 (cathode du thyristor T1). Au démarrage, l'interrupteur T3' est ouvert et les condensateurs C1, C2 et Ca sont chargés à travers la résistance R et les diodes D7 et D8. Les valeurs des condensateurs C2 et Ca sont plus faibles que la valeur du condensateur C1. Par conséquent, la tension à leurs bornes augmente plus rapidement que la tension aux bornes du condensateur C1. Dès que la tension aux bornes du condensateur Ca est suffisante, le circuit de commande 27 entre en fonctionnement et ferme l'interrupteur T3'. Ainsi, en régime établi, le courant de charge du condensateur C1 est dévié du condensateur C2 qui n'est pas dimensionné pour supporter de forts courants. Cette variante s'applique également au cas de la figure 3 avec un seul thyristor T.

Divers modes de réalisation ont été décrits. Diverses variantes et modifications apparaîtront à l'homme de l'art. En particulier, bien que les modes de réalisation aient été décrits en relation avec un exemple de pont redresseur double alternance, on pourra prévoir un pont monoalternance en utilisant une seule des diodes D3 et D4 et un seul des thyristors T1 et T2 (la diode D3 et le thyristor T2 ou la diode D4 et le thyristor T1). On pourra aussi prévoir un réseau multiphase avec autant de bras thyristor-diode que de phases (par exemple, trois thyristors et trois diodes pour un réseau triphasé). De plus, la génération des signaux de commande adaptés à la commande du pont redresseur dépend de l'application et est à la portée de l'homme du métier en fonction de cette application. En outre, la mise en oeuvre pratique des modes de réalisation qui ont été décrits est à la portée de l'homme du métier à partir des indications fonctionnelles qui ont été décrites ci-dessus.

## Revendications

1. Circuit de redressement comportant :
entre une première borne (23, 24) d'application d'une tension alternative (Vac) et une première borne (21) de fourniture d'une tension redressée (Vout), une première diode (D3, D4) ;
entre une deuxième borne (24, 23) d'application de la tension alternative et une deuxième borne (22) de fourniture de la tension redressée, un premier thyristor (T2, T1 ; T) à gâchette d'anode, l'anode du premier thyristor étant connectée à la deuxième borne (22) de fourniture de la tension redressée ; et
au moins un étage (29 ; 25, 26) de commande du premier thyristor, incluant :
une autre diode (D29 ; D25, D26) connectée avec son anode à la gâchette du premier thyristor et avec sa cathode à la deuxième borne (22) de fourniture de la tension redressée (Vout) ; et
un élément capacitif (C29 ; C25, C26) en série avec un élément résistif (R29 ; R25, R26) adaptés à relier la gâchette du premier thyristor à un circuit (27) de génération d'impulsions de commande.

2. Circuit selon la revendication 1, comportant en outre, entre la deuxième borne (24, 23) d'application de la tension alternative (Vac) et la première borne (21) de fourniture de la tension redressée (Vout), une deuxième diode (D4, D3).

3. Circuit selon la revendication 2, comportant en outre, entre la première borne (23, 24) d'application de la tension alternative (Vac) et la deuxième borne (22) de fourniture de la tension redressée (Vout), un deuxième thyristor (T1, T2) à gâchette d'anode, l'anode du deuxième thyristor étant connectée à la deuxième borne (22) de fourniture de la tension redressée.

4. Circuit selon la revendication 2, comportant en outre, entre la cathode du premier thyristor (T2, T1 ; T) et chaque borne d'application de la tension alternative (Vac), une diode (D5, D6).

5. Circuit selon l'une quelconque des revendications 1 à 4, dans lequel chaque thyristor (T ; T1, T2) est associé à un étage de commande (25, 26).

6. Circuit selon l'une quelconque des revendications 1 à 5, dans lequel le circuit de commande (27) génère des trains d'impulsions à une fréquence de l'ordre de 10 à 100 fois supérieure à la fréquence de la tension alternative (Vac).

7. Circuit selon la revendication 6, dans lequel le circuit de commande (27) est alimenté par une tension fournie par un circuit d'alimentation (28) connecté à la première borne (21) de fourniture de la tension redressée, un condensateur (Ca) reliant le circuit d'alimentation à la deuxième borne (22) de fourniture de la tension redressée.

8. Circuit selon la revendication 7, dans lequel un interrupteur (T3) commandé par le circuit de commande (27) est intercalé entre la deuxième borne (22) de fourniture de la tension redressée et un noeud (22a) d'interconnexion de l'anode du premier thyristor (T2, T1 ; T), de la cathode de l'autre diode (D29 ; D25, D26) de l'étage de commande (29 ; 25, 26), d'une borne de référence du circuit de commande et du condensateur (Ca).

9. Circuit selon l'une quelconque des revendications 1 à 8, comportant en outre un élément capacitif (C) entre les deux bornes (21, 22) de fourniture de la tension redressée (Vout).

10. Circuit selon les revendications 7 et 9, dans lequel un interrupteur (T3') commandé par le circuit de commande (27) est intercalé entre la deuxième borne (22) de fourniture de la tension redressée et un noeud d'interconnexion de deux condensateurs (C1, C2) constituant ledit élément capacitif, une diode (D) reliant ledit noeud à une borne d'alimentation du circuit de commande.

11. Circuit selon l'une quelconque des revendications 1 à 10, dans lequel au moins une diode (D7, D8) en série avec un élément résistif (R) relie la deuxième borne (22) de fourniture de la tension redressée (Vout) à une des bornes (23, 24) d'application de la tension alternative (Vac).

## Patentansprüche

1. Eine Gleichrichterschaltung, die Folgendes aufweist:
eine erste Diode (D3, D4) angeordnet zwischen einem ersten Anschluss (23, 24) zum Anlegen einer Wechselspannung (Vac) und einem ersten Anschluss (21) zur Abgabe einer gleichgerichteten Spannung (Vout);
einen ersten Anode-Gate-Thyristor (T2, T1; T) angeordnet zwischen einem zweiten Anschluss (24, 23) zum Anlegen der Wechselspannung und einem zweiten Anschluss (22) zur Abgabe der gleichgerichteten Spannung, wobei die Anode des ersten Thyristors mit dem zweiten Anschluss (22) zur Abgabe der gleichgerichteten Spannung verbunden ist; und
wenigstens eine Stufe (29; 25, 26) zum Steuern des ersten Thyristors, aufweisend:
eine weitere Diode (D29; D25, D26) deren Anode mit dem Gate des ersten Thyristors verbunden ist und deren Kathode mit dem zweiten Anschluss (22) zur Abgabe der gleichgerichteten Spannung (Vout) verbunden ist; und
ein kapazitives Element (C29; C25, C26) in Reihe mit einem Widerstandselement (R29; R25, R26), das geeignet ist, das Gate des ersten Thyristors mit einer Steuerimpulserzeugungsschaltung (27) zu verbinden.

2. Schaltung nach Anspruch 1, die ferner eine zweite Diode (D4, D3) aufweist angeordnet zwischen dem zweiten Anschluss (24, 23) zum Anlegen der Wechselspannung (Vac) und dem ersten Anschluss (21) zur Abgabe der gleichgerichteten Spannung (Vout).

3. Schaltung nach Anspruch 2, die ferner einen zweiten Anode-Gate-Thyristor (T1, T2) aufweist angeordnet zwischen dem ersten Anschluss (23, 24) zum Anlegen der Wechselspannung (Vac) und dem zweiten Anschluss (22) zur Abgabe der gleichgerichteten Spannung (Vout), wobei die Anode des zweiten Thyristors mit dem zweiten Anschluss (22) zur Abgabe der gleichgerichteten Spannung verbunden ist.

4. Schaltung nach Anspruch 2, die ferner eine Diode (D5, D6) aufweist angeordnet zwischen der Kathode des ersten Thyristors (T2, T1; T) und jedem Anschluss zum Anlegen der Wechselspannung (Vac).

5. Schaltung nach einem der Ansprüche 1 bis 4, wobei jeder Thyristor (T; T1, T2) mit einer Steuerstufe (25, 26) verbunden ist.

6. Schaltung nach einem der Ansprüche 1 bis 5, wobei die Steuerschaltung (27) Impulsfolgen mit einer Frequenz in der Größenordnung des 10- bis 100-fachen der Frequenz der Wechselspannung (Vac) erzeugt.

7. Schaltung nach Anspruch 6, wobei die Steuerschaltung (27) mit einer Spannung gespeist wird, die von einer Stromversorgungsschaltung (28) geliefert wird, die mit dem ersten Anschluss (21) zur Abgabe der gleichgerichteten Spannung verbunden ist, wobei ein Kondensator (Ca) die Stromversorgungsschaltung mit dem zweiten Anschluss (22) zur Abgabe der gleichgerichteten Spannung verbindet.

8. Schaltung nach Anspruch 7, wobei ein von der Steuerschaltung (27) gesteuerter Schalter (T3) zwischen dem zweiten Anschluss (22) zur Abgabe der gleichgerichteten Spannung und einem Verbindungsknoten (22a) für die Anode des ersten Thyristors (T2, T1; T), die Kathode der anderen Diode (D29; D25, D26), die Steuerstufe (29; 25, 26), einen Referenzanschluss der Steuerschaltung und den Kondensators (Ca) angeordnet ist.

9. Die Schaltung nach einem der Ansprüche 1 bis 8, die ferner ein kapazitives Element (C) zwischen den beiden Anschlüssen (21, 22) zur Abgabe der gleichgerichteten Spannung (Vout) aufweist.

10. Schaltung nach den Ansprüchen 7 und 9, bei der ein von der Steuerschaltung (27) gesteuerter Schalter (T3') zwischen dem zweiten Anschluss (22) zur Abgabe der gleichgerichteten Spannung und einem Verbindungsknoten für die zwei das kapazitive Element bildenden Kondensatoren (C1, C2) angeordnet ist, wobei eine Diode (D) den Knoten mit einem Anschluss zur Versorgung der Steuerschaltung verbindet.

11. Schaltung nach einem der Ansprüche 1 bis 10, wobei wenigstens eine Diode (D7, D8) in Reihe mit einem Widerstandselement (R) den zweiten Anschluss (22) zur Abgabe der gleichgerichteten Spannung (Vout) mit einem der Anschlüsse (23, 24) zum Anlegen der Wechselspannung (Vac) verbindet.

## Claims

1. A rectifying circuit comprising:
between a first terminal (23, 24) of application of an A.C. voltage (Vac) and a first terminal (21) of delivery of a rectified voltage (Vout), a first diode (D3, D4);
between a second terminal (24, 23) of application of the A.C. voltage and a second terminal (22) of delivery of the rectified voltage, a first anode-gate thyristor (T2, T1; T), the anode of the first thyristor being connected to the second rectified voltage delivery terminal (22); and
at least one stage (29; 25, 26) for controlling the first thyristor, comprising:
another diode (D29; D25, D26) connected by its anode to the first thyristor gate and by its cathode to the second terminal (22) for delivering the rectified voltage (Vout); and
a capacitive element (C29; C25, C26) in series with a resistive element (R29; R25, R26) adapted to connect the first thyristor gate to a control pulse generation circuit (27).

2. The circuit of claim 1, further comprising, between the second terminal (24, 23) of application of the A.C. voltage (Vac) and the first terminal (21) of delivery of the rectified voltage (Vout), a second diode (D4, D3).

3. The circuit of claim 2, further comprising, between the first terminal (23, 24) of application of the A.C. voltage (Vac) and the second terminal (22) of delivery of the rectified voltage (Vout), a second anode-gate thyristor (T1, T2), the anode of the second thyristor being connected to the second rectified voltage delivery terminal (22).

4. The circuit of claim 2, further comprising, between the cathode of the first thyristor (T2, T1; T) and each terminal of application of the A.C. voltage (Vac), a diode (D5, D6).

5. The circuit of any of claims 1 to 4, wherein each thyristor (T; T1, T2) is associated with a control stage (25, 26).

6. The circuit of any of claims 1 to 5, wherein the control circuit (27) generates pulse trains at a frequency in the order of from 10 to 100 times greater than the frequency of the A.C. voltage (Vac).

7. The circuit of claim 6, wherein the control circuit (27) is powered with a voltage delivered by a power supply circuit (28) connected to the first rectified voltage delivery terminal (21), a capacitor (Ca) connecting the power supply circuit to the second rectified voltage delivery terminal (22).

8. The circuit of claim 7, wherein a switch (T3) controlled by the control circuit (27) is interposed between the second rectified voltage delivery terminal (22) and a node (22a) of interconnection of the anode of the first thyristor (T2, T1; T), of the cathode of the other diode (D29; D25, D26) of the control stage (29; 25, 26), of a reference terminal of the control circuit, and of the capacitor (Ca).

9. The circuit of any of claims 1 to 8, further comprising a capacitive element (C) between the two terminals (21, 22) of delivery of the rectified voltage (Vout).

10. The circuit of claim 7 and 9, wherein a switch (T3') controlled by the control circuit (27) is interposed between the second rectifying voltage delivery terminal (22) and a node of interconnection of two capacitors (C1, C2) forming said capacitive element, a diode (D) connecting said node to a terminal for supplying the control circuit.

11. The circuit of any of claims 1 to 10, wherein at least one diode (D7, D8) in series with a resistive element (R) connects the second terminal (22) of delivery of the rectified voltage (Vout) to one of the terminals (23, 24) of application of the A.C. voltage (Vac).
